# FASCICULE DE BREVET EUROPEEN

(11) **EP 3 015 364 B1**
(45) Date de publication et mention de la délivrance du brevet: **02.12.2020**
(21) Numéro de dépôt: 15189294.0
(22) Date de dépôt: 12.10.2015
(51) Int. Cl.: B64C 27/605

(54) **DISPOSITIF MECANIQUE POUR COMBINER AU MOINS UN PREMIER ORDRE ET UN DEUXIEME ORDRE DE COMMANDE, ET AERONEF MUNI D'UN TEL DISPOSITIF**
MECHANISCHE VORRICHTUNG ZUM KOMBINIEREN MINDESTENS EINER ERSTEN UND EINER ZWEITEN ORDNUNG VON STEUERBEFEHLEN, UND MIT EINER SOLCHEN VORRICHTUNG AUSGESTATTETES LUFTFAHRZEUG
A MECHANICAL DEVICE FOR MIXING AT LEAST FIRST AND SECOND CONTROL ORDERS, AND AN AIRCRAFT PROVIDED WITH SUCH A DEVICE

(30) Priorité: 30.10.2014 FR 1402458
(43) Date de publication de la demande: 04.05.2016
(73) Titulaire: Airbus Helicopters, 13725 Marignane Cedex (FR)
(72) Inventeur: TEMPIER, Christophe, 13127 VITROLLES (FR)
(74) Mandataire: GPI & Associés

(56) Documents cités:
- FR-A- 1 009 222
- US-A- 3 141 352
- US-A- 3 176 936
- US-A- 4 482 115

## Description

La présente invention concerne un dispositif mécanique pour combiner au moins un premier ordre et un deuxième ordre de commande.

L'invention est rattachée au domaine des aéronefs, et des giravions notamment. L'invention relève plus particulièrement des systèmes de commande de vol qui sont actionnés par l'homme pour piloter un aéronef à voilure tournante, en particulier en tangage et en roulis.

Un giravion est communément équipé de systèmes de commande à manœuvre manuelle pour permettre à un pilote de diriger le giravion.

Parmi ces systèmes de commande, un manche de commande cyclique permet au pilote de modifier cycliquement le pas des pales d'un rotor principal pour diriger le giravion en tangage et en roulis. Un levier de commande collectif permet au pilote de modifier collectivement le pas des pales d'un rotor principal pour diriger le giravion en élévation.

Le levier de commande collectif et le manche de commande cyclique sont généralement reliés aux pales, via des liaisons mécaniques dénommées « timoneries » ou « chaînes cinématiques mécaniques ». Ces liaisons mécaniques aboutissent à un plateau non tournant d'un ensemble de plateaux de commande. Un plateau tournant de cet ensemble de plateaux de commande est alors lié mécaniquement à chaque pale d'un rotor par une bielle de commande de pas. L'ensemble de plateaux de commande est dénommé plus simplement « plateaux cycliques » par l'homme du métier.

Les efforts à exercer pour modifier le pas des pales étant importants, les liaisons mécaniques peuvent comprendre des servocommandes reliées aux plateaux cycliques. Par exemple, l'aéronef comprend au moins une servocommande pour piloter le mouvement en tangage de l'aéronef dénommée « servocommande de tangage » par commodité. Deux servocommandes de roulis gauche et droite sont en outre utilisées pour piloter le mouvement en roulis de l'aéronef.

Lorsque le pilote souhaite modifier le pas collectif des pales, ce pilote manœuvre manuellement le levier de commande collectif pour ordonner aux trois servocommandes de faire coulisser les plateaux cycliques le long d'un mât d'entraînement en rotation du rotor.

Les bielles de commande de pas sont alors toutes déplacées de manière identique ce qui implique que le pas de toutes les pales varie du même angle.

A contrario, pour faire varier le pas cyclique des pales d'un rotor afin de diriger l'aéronef dans une direction donnée, le pilote ordonne alors l'extension ou la rétraction d'au moins une servocommande, en basculant manuellement le manche de commande cyclique dans la direction souhaitée.

Les plateaux cycliques s'inclinent alors par rapport au mât du rotor principal. Chaque bielle de commande de pas est ainsi déplacée en fonction de l'objectif fixé pour générer une variation cyclique adéquate du pas de chaque pale.

Par ailleurs, les liaisons mécaniques peuvent inclure au moins un combinateur. Le combinateur est un organe mécanique où se superposent par exemple des ordres de modification du pas cyclique et du pas collectif des pales.

Un tel combinateur vise à permettre le fonctionnement des commandes de pas cyclique et de pas collectif indépendamment l'une de l'autre et théoriquement sans interaction entre elles. Le combinateur transmet aux servocommandes un ordre de modification du pas collectif des pales d'un rotor lorsque ce combinateur est actionné par le levier de pas collectif, et un ordre de modification du pas cyclique quand le combinateur est actionné par le manche cyclique.

Un tel combinateur est classiquement muni de moyens de renvoi en forme de L. Chaque moyen de renvoi en forme de L est pourvu d'une première branche et d'une deuxième branche formant un angle sensiblement perpendiculaire entre elles. Chaque moyen de renvoi en L est ainsi apte à effectuer une rotation autour d'un axe de pivotement situé à la jonction de la première branche et de la deuxième branche.

Par exemple, le combinateur comporte un moyen de renvoi en L par servocommande dénommé « moyen de renvoi principal » par commodité. Chaque moyen de renvoi principal est alors relié au manche cyclique par sa première branche et à une servocommande par sa deuxième branche.

En outre, le combinateur comporte un moyen de renvoi dénommé « moyen de renvoi secondaire » par commodité.

Ce moyen de renvoi secondaire comporte alors une branche d'entrée reliée au levier de pas collectif et à un arbre de conjugaison. De plus, le moyen de renvoi secondaire présente un guignol par servocommande, chaque guignol du moyen de renvoi secondaire s'étendant de l'arbre de conjugaison à un point de pivot d'un moyen de renvoi principal.

Ainsi, lorsqu'un pilote manœuvre le manche de commande cyclique, le moyen de renvoi secondaire reste immobile et immobilise de fait les axes de pivotement des moyens de renvoi principaux. Dès lors, chaque moyen de renvoi principal sollicité par le manche cyclique effectue une rotation autour de son axe de pivotement.

Par contre, un mouvement du levier de commande collectif implique la rotation de la branche d'entrée du moyen de renvoi secondaire, et par suite la rotation de l'arbre de conjugaison et de tous les guignols. Tous les moyens de renvoi principaux effectuent alors une rotation conjointe.

Cependant, lors d'un mouvement du levier de pas collectif, les moyens de renvoi principaux sont de fait mis en rotation. Dès lors, leur rotation entraîne un déplacement des organes de transmission reliant chaque moyen de renvoi principal au manche de commande cyclique.

Par suite, un déplacement important du levier de commande collectif peut induire un déplacement du manche de commande cyclique.

Sur un giravion muni de vérins montés en série sur les liaisons mécaniques reliant le manche cyclique à un combinateur, ces vérins peuvent être automatiquement contrôlés par un système de pilotage automatique pour compenser ce phénomène et le rendre transparent pour un pilote.

Le document US4482115 décrit un autre dispositif susceptible d'être soumis au même problème.

Ce dispositif est muni d'un premier moyen de renvoi en forme de L relié à un deuxième moyen de renvoi en forme de T uniquement par une bielle.

Le moyen de renvoi en L comporte deux branches orthogonales entre elles. Ces deux branches sont reliées l'une à l'autre au niveau d'une première articulation de pivotement. De plus, chaque branche s'étend de la première articulation de pivotement vers une extrémité libre comportant une articulation.

Le moyen de renvoi en forme de T comporte une jambe verticale et une branche horizontale.

La branche horizontale est munie d'une deuxième articulation de pivotement articulée au support. Cette deuxième articulation de pivotement est en outre disposée entre une première extrémité libre et une deuxième extrémité libre de la branche horizontale.

Par ailleurs, la jambe verticale est solidarisée à la branche horizontale au niveau de la deuxième articulation de pivotement. Cette jambe verticale comporte une troisième extrémité libre du moyen de renvoi en T.

Dès lors, la deuxième extrémité libre du moyen de renvoi en L est uniquement reliée à la troisième extrémité du moyen de renvoi en T par une bielle.

Par ailleurs, on connait les documents US 2304487 et US 3176936.

En outre, l'ensemble de plateaux de commande d'un giravion sollicité cycliquement doit basculer autour de deux axes perpendiculaires, à savoir un axe de basculement en tangage et un axe de basculement en roulis.

Sur certains giravions, les points de fixation des servocommandes à l'ensemble de plateaux de commande sont alors placés sur lesdits axes.

Par contre, les servocommandes sont parfois décalées des ces axes de basculement en roulis et/ou en tangage. Ces servocommandes peuvent être par exemple équi-réparties circonférentiellement. Ainsi, trois servocommandes sont par exemple séparées par un angle de 120° dans le cadre d'un giravion muni de trois servocommandes.

Le manche de commande cyclique est alors relié à un moyen de déphasage angulaire. Ce moyen de déphasage est relié au combinateur par le biais d'une liaison mécanique par servocommande.

Un ordre dit parfois « ordre pur » par l'homme du métier en roulis ou en tangage donné par le manche de commande cyclique est alors transformé en un mouvement composite de toutes les liaisons mécaniques en aval du moyen de déphasage.

Le document US 3141352 présente un dispositif auto-réglable d'une tension.

Le document FR 1009222 est aussi connu.

La présente invention a alors pour objet de proposer un dispositif mécanique pour combiner un premier ordre et un deuxième ordre de commande visant à s'affranchir des limitations mentionnées ci-dessus.

L'invention concerne donc un dispositif mécanique destiné à combiner au moins un premier ordre de commande et un deuxième ordre de commande provenant de chaînes mécaniques de transmission d'un mouvement.

Ce dispositif mécanique comporte :
- un moyen de renvoi muni d'une première articulation ainsi que d'une deuxième articulation et d'une troisième articulation, la première articulation définissant un premier axe de rotation vertical et étant apte à être reliée à un premier lien de sortie mécanique, la deuxième articulation définissant un deuxième axe de rotation vertical, la troisième articulation définissant un troisième axe de rotation vertical, le premier axe de rotation vertical ainsi que le deuxième axe de rotation vertical étant alignés dans un premier plan, le deuxième axe de rotation et le troisième axe de rotation étant alignés dans un deuxième plan,
- un organe mécanique allongé s'étendant d'une première extrémité articulée au moyen de renvoi par la deuxième articulation vers une deuxième extrémité, ledit organe mécanique allongé comprenant une quatrième articulation définissant un quatrième axe de rotation vertical immobile, la quatrième articulation étant apte à être reliée à un support immobile, ledit organe mécanique allongé étant uniquement mobile en rotation autour dudit quatrième axe de rotation, ledit organe mécanique allongé comprenant une articulation de liaison qui est apte à être liée à une première liaison mécanique et qui définit un axe de rotation de liaison vertical,
- une pièce mécanique uniquement mobile en rotation autour dudit quatrième axe de rotation par le biais d'une articulation de pivotement, ladite pièce mécanique ayant une articulation d'entrée qui est apte à être reliée à une deuxième liaison mécanique et qui définit un axe de rotation d'entrée vertical,
- une bielle articulée d'une part à la troisième articulation du moyen de renvoi et d'autre part à la pièce mécanique autour d'un cinquième axe de rotation vertical par une cinquième articulation, le deuxième axe de rotation ainsi que le troisième axe de rotation, le quatrième axe de rotation et le cinquième axe de rotation formant chacun en permanence un sommet d'un parallélogramme déformable dans chaque plan orthogonal à ces deuxième, troisième, quatrième, et cinquième axes de rotation.

Une extrémité de l'organe mécanique allongé doit être entendue comme représentant une zone extrémale de cet organe mécanique et pas nécessairement un bout de cet organe mécanique.

L'organe mécanique allongé peut s'étendre le long d'une droite.

Eventuellement, le dispositif mécanique comporte uniquement un moyen de renvoi, un organe mécanique allongé articulé au moyen de renvoi, une pièce mécanique mobile en rotation autour du même axe de rotation que l'organe mécanique, et une bielle articulée d'une part au moyen de renvoi et d'autre part à la pièce mécanique.

Ce dispositif mécanique est alors compact.

Une articulation définissant un axe de rotation doit être entendue comme représentant un organe autorisant au moins une rotation relative entre deux corps autour de cet axe de rotation. Par exemple, une articulation à roulement autorise une rotation autour d'un unique axe de rotation. Par contre, une articulation à rotule autorise une rotation autour de trois axes de rotation différents passant par un même centre de rotation.

Un axe de rotation qualifié de « vertical » est en outre un axe de rotation dirigé selon une direction verticale. Tous les axes de rotation verticaux sont ainsi parallèles les uns par rapport aux autres. La direction verticale correspond par exemple à la direction selon laquelle les organes décrits s'étendent en épaisseur.

Dès lors, le dispositif mécanique est muni d'un moyen de renvoi pourvu d'au moins trois points d'articulation. Ce moyen de renvoi peut avoir la forme d'un L, d'un T ou encore une forme triangulaire selon la réalisation et le nombre de points d'articulation.

L'articulation dite « première articulation » permet dans ces conditions au moins une rotation relative entre le moyen de renvoi et un premier lien de sortie mécanique autour du premier axe de rotation.

De même, l'articulation dite « deuxième articulation » permet au moins une rotation relative entre le moyen de renvoi et l'organe mécanique allongé autour du deuxième axe de rotation.

L'articulation dite « troisième articulation » permet au moins une rotation relative entre le moyen de renvoi et la bielle autour du troisième axe de rotation.

L'articulation dite « quatrième articulation » permet au moins une rotation relative entre un support immobile et l'organe mécanique allongé autour du quatrième axe de rotation. Le quatrième axe de rotation étant immobile, l'organe mécanique allongé peut présenter uniquement un degré de liberté en rotation.

De même, la pièce mécanique ne peut effectuer qu'un mouvement de rotation autour du quatrième axe de rotation par le biais de l'articulation de pivotement. Toutefois, la pièce mécanique est indépendante de l'organe mécanique allongé, la pièce mécanique et l'organe mécanique allongé pouvant effectuer des rotations indépendamment l'un de l'autre.

L'articulation dite « cinquième articulation » permet au moins une rotation relative entre la bielle et la pièce mécanique autour du cinquième axe de rotation.

Enfin, l'articulation dite « articulation d'entrée » permet au moins une rotation relative entre une deuxième liaison mécanique et la pièce mécanique autour de l'axe de rotation dit « axe de rotation d'entrée ».

Selon l'invention, le système comporte alors un organe mécanique allongé articulé au moyen de renvoi et à la pièce mécanique. En outre, la bielle relie le moyen de renvoi à la pièce mécanique.

De plus, la deuxième articulation ainsi que la troisième articulation, la quatrième articulation et la cinquième articulation sont agencées de manière particulière et innovante.

En effet, la distance séparant le quatrième axe de rotation du cinquième axe de rotation est en permanence égale à la distance séparant le deuxième axe de rotation du troisième axe de rotation. De même, la distance séparant le deuxième axe de rotation du quatrième axe de rotation est en permanence égale à la distance séparant le troisième axe de rotation du cinquième axe de rotation.

Dans chaque plan orthogonal à la direction verticale, ces deuxième, troisième, quatrième, et cinquième axes de rotation forment conjointement les sommets d'un parallélogramme. La forme du parallélogramme évolue en fonction des mouvements de l'organe mécanique allongé et de la pièce mécanique. Toutefois, le sommet matérialisé par le quatrième axe de rotation demeure immobile.

Dès lors, la bielle demeure sensiblement parallèle à l'organe mécanique allongé. De plus, la pièce mécanique comporte un segment demeurant sensiblement parallèle au deuxième plan contenant le deuxième axe de rotation et le troisième axe de rotation.

Le dispositif présente ainsi une forme en parallélogramme entre ces deuxième, troisième, quatrième, et cinquième axes de rotation pour un observateur observant le dispositif verticalement.

Cette structure particulière tend à éviter les déplacements indus observés sur certains combinateurs, et donc l'utilisation de vérins pour compenser des tels déplacements. Un ordre d'entrée transmis par une liaison mécanique est retranscrit fidèlement par le dispositif.

En effet, la première liaison mécanique peut transmettre un ordre de déplacement, provenant d'une commande de vol d'un aéronef par exemple. Dès lors, cette première liaison mécanique induit une rotation de l'organe mécanique allongé.

En raison de la présence de la bielle et de la pièce mécanique ainsi que de leurs agencements particuliers, cette rotation de l'organe mécanique allongé induit un déplacement du moyen de renvoi. Le premier lien de sortie mécanique se déplace alors sur une distance égale à la distance de déplacement de la première liaison mécanique.

Le dispositif mécanique associe des éléments basculants et un moyen de renvoi formant en permanence un parallélogramme. Ce montage assure donc un déplacement translatif parfait du moyen de renvoi suite à une rotation de l'organe mécanique allongé.

Par suite, le dispositif mécanique ne doit alors pas nécessairement être associé à un vérin utilisé notamment pour compenser la présence de déplacements indus. Le dispositif mécanique tend donc à optimiser la sécurité d'une architecture de commande de vol par exemple, en ne dépendant pas du fonctionnement d'un vérin électrique notamment.

Un tel vérin peut néanmoins être agencé dans le cadre d'un système de pilotage automatique. L'autorité du vérin est alors totalement consacrée à ce pilotage, contrairement à un vérin de l'état de la technique utilisé aussi en partie pour compenser des déplacements indus d'un combinateur.

De même, la deuxième liaison mécanique peut transmettre au dispositif un ordre de déplacement provenant d'une commande de vol d'un aéronef par exemple.

Dès lors, cette deuxième liaison mécanique induit une rotation de la pièce mécanique.

En raison de la présence de la bielle et de l'organe mécanique allongé ainsi que de leurs agencements particuliers, cette rotation de l'organe mécanique allongé induit une rotation du moyen de renvoi par rapport à l'organe mécanique. Le premier lien de sortie mécanique est alors déplacé par le moyen de renvoi.

Néanmoins, cette rotation n'a aucun impact sur la position de l'organe mécanique allongé. Si une commande de vol est par exemple reliée à cet organe mécanique allongé, cette commande de vol n'est pas déplacée par l'organe mécanique allongé.

L'usage de la deuxième liaison mécanique n'entraine pas un pivotement de l'organe mécanique allongé, cet organe mécanique allongé ne pivotant que suite à l'usage de la première liaison mécanique
De plus, l'usage de la première liaison mécanique n'entraine pas un pivotement du moyen de renvoi par rapport à l'organe mécanique allongé. Le moyen de renvoi ne pivote que suite à l'usage de la première liaison mécanique.

Par suite, l'invention propose un dispositif mécanique simple et innovant permettant de combiner des ordres de manière précise et sans interférence.

Le dispositif mécanique peut de plus comporter une ou plusieurs des caractéristiques suivantes.

Ainsi, au moins une desdites première articulation, troisième articulation, cinquième articulation, articulation de liaison et articulation d'entrée comporte une rotule munie d'une tige s'étendant respectivement selon le premier axe de rotation, le troisième axe de rotation, le cinquième axe de rotation, l'axe de rotation de liaison et l'axe de rotation d'entrée.

Chaque rotule représente ainsi une articulation relativement simple tendant en outre à éviter un grippage du dispositif.

Par contre, la quatrième articulation peut comporter une tige de pivotement s'étendant verticalement selon le quatrième axe de rotation. De plus, la quatrième articulation comprend un moyen de roulement qui est agencé autour de cette tige de pivotement et est solidaire de l'organe mécanique allongé. De plus, l'articulation de pivotement comporte par exemple cette tige de pivotement et un système de roulement qui est agencé autour de la tige de pivotement et solidaire de ladite pièce mécanique.

Par suite, la quatrième articulation et l'articulation de pivotement représentent chacune un pivot. Cette caractéristique vise à ne pas introduire un mouvement parasite lors du pivotement de l'organe mécanique allongé et de la pièce mécanique.

De même, la deuxième articulation peut aussi être une articulation à roulement.

En outre, la bielle ainsi que ledit moyen de renvoi et ladite pièce mécanique peuvent être coplanaires.

Par ailleurs, l'organe mécanique allongé peut comporter une chape en forme de C munie de deux joues en vis-à-vis, la deuxième articulation s'étendant verticalement d'une joue à l'autre joue, le moyen de renvoi s'étendant partiellement entre lesdites deux joues.

Cette configuration permet notamment de placer le moyen de renvoi, la bielle et la pièce mécanique dans un même plan horizontal.

En effet, l'organe mécanique allongé peut aussi comprendre une niche dans laquelle est articulée la pièce mécanique autour du quatrième axe de rotation.

Par ailleurs, cette quatrième articulation peut comporter un moyen de fixation apte à fixer cette quatrième articulation à un support.

Selon un autre aspect, l'organe mécanique allongé et la pièce mécanique comportent uniquement un degré de liberté en rotation autour du quatrième axe de rotation.

Le quatrième axe de rotation est immobile par rapport à une structure portant le dispositif. Dès lors, la mobilité de l'organe mécanique et de la pièce mécanique est retreinte pour obtenir les résultats explicités précédemment.

Par contre, le moyen de renvoi peut comporter uniquement un degré de liberté en rotation autour du deuxième axe de rotation par rapport à l'organe mécanique allongé.

Selon un autre aspect, l'articulation de liaison est par exemple agencée à la deuxième extrémité de l'organe mécanique allongé.

Cet agencement facilite le déplacement de l'organe mécanique allongé suite à un ordre provenant d'une chaîne de transmission du mouvement reliée à cette articulation de liaison.

Selon une variante, la pièce mécanique peut comporter une articulation intermédiaire apte à être reliée à un sous ensemble de couplage, ladite articulation intermédiaire définissant un axe de rotation intermédiaire vertical.

La pièce mécanique peut ainsi avoir une forme en L ou triangulaire par exemple.

Par ailleurs, le moyen de renvoi peut comporter une sixième articulation définissant un sixième axe de rotation vertical, cette sixième articulation étant apte à être liée à un deuxième lien de sortie mécanique, le sixième axe de rotation vertical étant agencé dans le premier plan, le deuxième axe de rotation étant disposé entre le premier axe de rotation et le sixième axe de rotation.

Dès lors, une rotation du moyen de renvoi permet de transmettre des ordres antagonistes à deux liens de sortie mécaniques distincts. Par contre, le déplacement du moyen de renvoi permet de transmettre des ordres identiques à deux liens de sortie mécaniques distincts

Selon un autre aspect, le cinquième axe de rotation est agencé à mi-distance entre le quatrième axe de rotation et l'axe de rotation d'entrée.

Par ailleurs, le deuxième plan contenant notamment le troisième axe de rotation et le deuxième axe de rotation est par exemple orthogonal au premier plan contenant le premier axe de rotation et le deuxième axe de rotation.

Cette caractéristique permet d'optimiser le déplacement de chaque lien de sortie mécanique relié au moyen de renvoi.

L'invention vise par ailleurs un système mécanique. Ce système mécanique comporte un dispositif mécanique du type décrit précédemment, un premier lien de sortie mécanique étant articulé à la première articulation du moyen de renvoi, une première liaison mécanique étant articulée à l'articulation de liaison, et une deuxième liaison mécanique étant articulée à l'articulation d'entrée.

Ce système peut comporter une ou plusieurs des caractéristiques qui suivent.

Ainsi, le premier lien de sortie mécanique comporte éventuellement une première servocommande reliée à un ensemble de plateaux de commande, cet ensemble de plateaux de commande étant apte à être relié à des pales d'un rotor.

Lorsque le moyen de renvoi comporte une sixième articulation reliée à un deuxième lien de sortie mécanique, ce deuxième lien de sortie mécanique peut comporter une deuxième servocommande reliée à l'ensemble de plateaux de commande.

Un ordre provenant de l'une des liaisons mécanique induit alors un mouvement du moyen de renvoi, et par suite une extension ou une rétraction de la première servocommande et de la deuxième servocommande.

Ainsi, la première liaison mécanique est par exemple reliée à un organe de commande manuel dudit système par une chaîne de transmission du mouvement. De même, la deuxième liaison mécanique est reliée à un moyen de commande manuel dudit système par une chaîne de transmission du mouvement.

Ces chaînes mécaniques peuvent comporter des vérins d'un système de pilotage automatique. Néanmoins, le contrôle manuel du rotor ne nécessite pas l'emploi d'un tel vérin.

En outre, la première liaison mécanique peut être reliée à un sous ensemble de couplage, ce sous ensemble de couplage étant relié à une troisième servocommande qui est reliée à l'ensemble de plateaux de commande, le sous ensemble de couplage étant relié :
- à un organe de commande manuel pour transmettre un premier ordre à la troisième servocommande et pour pivoter l'organe mécanique allongé autour du quatrième axe de rotation afin de déplacer le moyen de renvoi pour transmettre un même deuxième ordre à la première et à la deuxième servocommandes, le deuxième ordre étant différent du premier ordre et
- à un moyen de commande manuel pour transmettre un troisième ordre à la troisième servocommande et pour pivoter l'organe mécanique allongé autour du quatrième axe de rotation afin de déplacer le moyen de renvoi pour transmettre un quatrième ordre identique à la première et à la deuxième servocommande, le troisième ordre étant identique au quatrième ordre.

Ainsi, un ordre de tangage transmis par l'organe de commande manuel induit l'extension de la troisième servocommande et en parallèle la rétraction de la première servocommande et de la deuxième servocommande, ou la rétraction de la troisième servocommande et en parallèle l'extension de la première servocommande et de la deuxième servocommande.

Par contre, un ordre collectif transmis par le moyen de commande manuel induit l'extension de la première servocommande ainsi que de la deuxième servocommande et de la troisième servocommande, ou la rétraction de la première servocommande ainsi que de la deuxième servocommande et de la troisième servocommande.

Le sous ensemble de couplage peut aussi comporter un dispositif de sommation selon l'invention.

Par exemple le système mécanique comporte un dispositif mécanique selon un mode de réalisation relié à un coupleur du sous ensemble de couplage, ce coupleur étant par ailleurs relié à un dispositif mécanique selon un autre mode de réalisation. Ce coupleur peut aussi être un dispositif mécanique selon un mode de réalisation.

Le système mécanique représente alors une architecture de commandes de vol d'un giravion. Cette architecture est notamment applicable à un giravion muni de trois servocommandes pour contrôler un rotor. Ces servocommandes ne sont par exemple pas agencées sur les axes de tangage et de roulis de ce rotor.

Outre un système mécanique, l'invention vise un aéronef muni de ce système mécanique.

L'invention et ses avantages apparaîtront avec plus de détails dans le cadre de la description qui suit avec des exemples donnés à titre illustratif en référence aux figures annexées qui représentent :
- la figure 1, une vue en trois dimensions d'un dispositif mécanique selon un premier mode de réalisation de l'invention relié à un lien de sortie mécanique,
- la figure 2, une coupe d'une articulation de type rotule,
- la figure 3, une coupe d'une articulation de type roulements à billes ou à rouleaux,
- la figure 4, une coupe montrant l'agencement de l'organe mécanique allongé et de la pièce mécanique autour du quatrième axe de rotation,
- la figure 5, une vue illustrant le parallélogramme délimité par les troisième, quatrième, cinquième et sixième axes de rotation,
- la figure 6, une vue illustrant le fonctionnement du premier mode de réalisation,
- la figure 7, une vue d'un dispositif mécanique selon un deuxième mode de réalisation de l'invention relié à deux liens de sortie mécanique,
- les figures 8 et 9, des vues schématiques explicitant le fonctionnement de ce deuxième mode de réalisation,
- les figures 10 à 12, des vues schématiques d'un système mécanique muni de deux dispositifs mécaniques, et
- la figure 13, une vue d'un dispositif mécanique selon un troisième mode de réalisation de l'invention agencé dans un système mécanique.

Les éléments présents dans plusieurs figures distinctes sont affectés d'une seule et même référence.

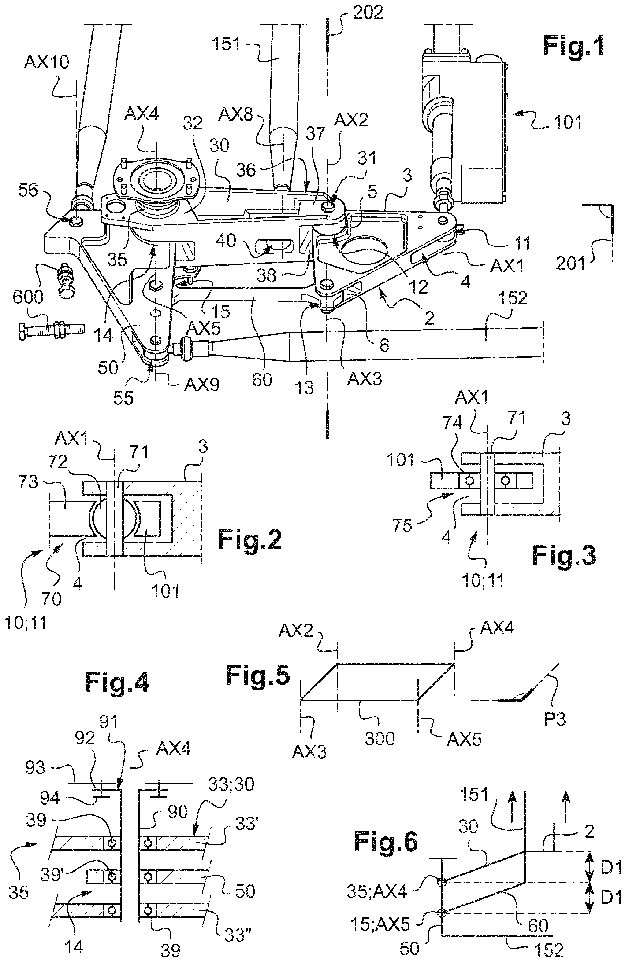

La figure 1 présente un dispositif mécanique 1 selon un premier mode de réalisation de l'invention.

Quel que soit le mode de réalisation, ce dispositif mécanique 1 est muni d'un moyen de renvoi 2.

Le moyen de renvoi comporte une structure 3 triangulaire ou en forme de L.

Le moyen de renvoi comporte en outre une pluralité d'articulations 10.

Par suite, le moyen de renvoi 2 comporte une articulation dite « première articulation 11 » qui définit un premier axe de rotation AX1 s'étendant verticalement. Cette première articulation 11 est notamment disposée dans un premier renfoncement 4 de la structure 3. La première articulation 11 permet d'articuler en rotation autour du premier axe de rotation AX1 le moyen de renvoi à un premier lien de sortie mécanique 101.

En référence à la figure 2 et indépendamment de la réalisation, la première articulation 11 peut être une articulation à rotule 70.

Ainsi, la première articulation 11 comporte une tige 71 traversant une rotule 72 agencée dans une cage 73. Par exemple, la tige 71 est solidaire de la structure 3 du moyen de renvoi 2, la cage 73 étant solidaire du premier lien de sortie mécanique 101.

Selon la réalisation de la figure 3, la première articulation peut être une articulation 75 de type à roulement à billes ou à rouleaux. Ainsi, la première articulation 11 comporte une tige 71 traversant un roulement à billes ou à rouleaux 74. Par exemple, la tige 71 est solidaire de la structure 3 du moyen de renvoi 2, le roulement à billes ou à rouleaux 74 étant solidaire du premier lien de sortie mécanique 101.

En référence à la figure 1, le moyen de renvoi 2 comporte aussi une articulation dite « deuxième articulation 12 » qui définit un deuxième axe de rotation AX2 s'étendant verticalement. Cette deuxième articulation 12 est une articulation à roulement à billes ou à rouleaux. Cette deuxième articulation 12 est notamment disposée dans un deuxième renfoncement 5 de la structure 3.

Par ailleurs, le moyen de renvoi 2 comporte une articulation dite « troisième articulation 13 » qui définit un troisième axe de rotation AX3 s'étendant verticalement. Cette troisième articulation peut être une articulation à rotule, voire une articulation à roulement à billes ou à rouleaux, agencée dans un renfoncement 6 de la structure 3.

Le premier axe de rotation AX1 et le deuxième axe de rotation AX2 sont alignés et contenus dans un même premier plan 201. Le troisième axe de rotation AX3 et le deuxième axe de rotation AX2 sont en outre contenus dans un deuxième plan 202 éventuellement orthogonal au premier plan 201.

Par ailleurs, le dispositif mécanique comporte un organe mécanique allongé 30 articulé au moyen de renvoi 2.

Cet organe mécanique allongé s'étend alors d'une première extrémité 31 vers une deuxième extrémité 32.

La première extrémité 31 est articulée au moyen de renvoi 2 par la deuxième articulation 12. Par exemple, l'organe mécanique allongé 30 comporte une chape 36 en forme de C. Cette chape 36 est ainsi munie de deux joues 37, 38 en vis-à-vis qui délimitent verticalement un espace. La deuxième articulation 12 s'étend alors verticalement d'une joue 37 à l'autre joue 38 dans cet espace, le moyen de renvoi 2 s'étendant partiellement entre les deux joues 37, 38.

La deuxième articulation 12 confère alors un degré de liberté en rotation autour du deuxième axe de rotation AX2 au moyen de renvoi 2 par rapport à l'organe mécanique allongé 30.

Par ailleurs, l'organe mécanique allongé 30 comprend une articulation dite « quatrième articulation 35 » qui définit un quatrième axe de rotation AX4 s'étendant verticalement. La quatrième articulation 35 est une articulation à roulement à billes ou à rouleaux. Cette quatrième articulation 35 articule en rotation autour du quatrième axe de rotation AX4 l'organe mécanique allongé à un support immobile. Dès lors, l'organe mécanique allongé comporte uniquement un degré de liberté en rotation autour du quatrième axe de rotation.

En outre, l'organe mécanique allongé 30 comprend une articulation dite « articulation de liaison 40 » qui définit un axe de rotation de liaison AX8 vertical. L'articulation de liaison 40 articule alors en rotation autour de l'axe de rotation de liaison AX8 une première liaison mécanique 151 à l'organe mécanique allongé. Cette articulation de liaison peut être une articulation à rotule, voire une articulation à roulement à billes ou à rouleaux.

Par ailleurs, le dispositif mécanique 1 est muni d'une pièce mécanique 50 dénommée usuellement « sonnette » par l'homme du métier, cette pièce mécanique est articulée en rotation autour du quatrième axe de rotation AX4 par une articulation de pivotement 14. Cette pièce mécanique 50 comporte alors uniquement un degré de liberté en rotation autour du quatrième axe de rotation AX4.

La figure 4 illustre cette configuration.

Ainsi, la quatrième articulation 35 comporte par exemple une tige de pivotement 90 s'étendant verticalement selon le quatrième axe de rotation AX4. Cette tige de pivotement 90 est par exemple immobilisée à un support 93 d'un aéronef par un moyen de fixation 91. Dès lors, le moyen de fixation 91 comporte par exemple une plaque 92 solidaire de la tige de pivotement 90. De plus, le moyen de fixation 91 comprend alors des organes de fixation 94 usuels de type vis ou rivets par exemple permettant de fixer la plaque 92 au support 93.

Par ailleurs, l'organe mécanique allongé 30 peut comprendre une portion restreinte 33 délimitant une niche. Cette niche est ainsi délimitée verticalement par une paroi supérieure 33' et une paroi inférieure 33" de l'organe mécanique allongé 30.

Dès lors, la quatrième articulation 35 comporte favorablement un système de roulement 39 à billes ou à rouleaux solidaire de la paroi inférieure de l'organe mécanique allongé. De même, un système de roulement 39 à billes ou à rouleaux est solidaire de la paroi supérieure de l'organe mécanique allongé. Chaque système de roulement est alors engagé autour de la tige de pivotement 90.

Par suite, la pièce mécanique s'étend d'une première zone extrémale articulée autour du quatrième axe de rotation vers une deuxième zone extrémale en passant par une portion centrale.

La première zone extrémale est alors articulée par un système de roulement 39' à billes ou à rouleaux à la tige de pivotement 90.

En référence à la figure 1, la pièce mécanique 50 est par ailleurs munie d'une articulation dite « articulation d'entrée 55 ».

L'articulation d'entrée 55 est reliée à une deuxième liaison mécanique 152. Cette articulation d'entrée 55 peut être une articulation à rotule, voire une articulation à roulement à billes ou à rouleaux. L'articulation d'entrée est éventuellement agencée au niveau de la deuxième zone extrémale de la pièce mécanique selon la variante.

L'articulation d'entrée 55 définit un axe de rotation d'entrée AX9 vertical autour duquel la deuxième liaison mécanique 152 peut effectuer une rotation par rapport à la pièce mécanique.

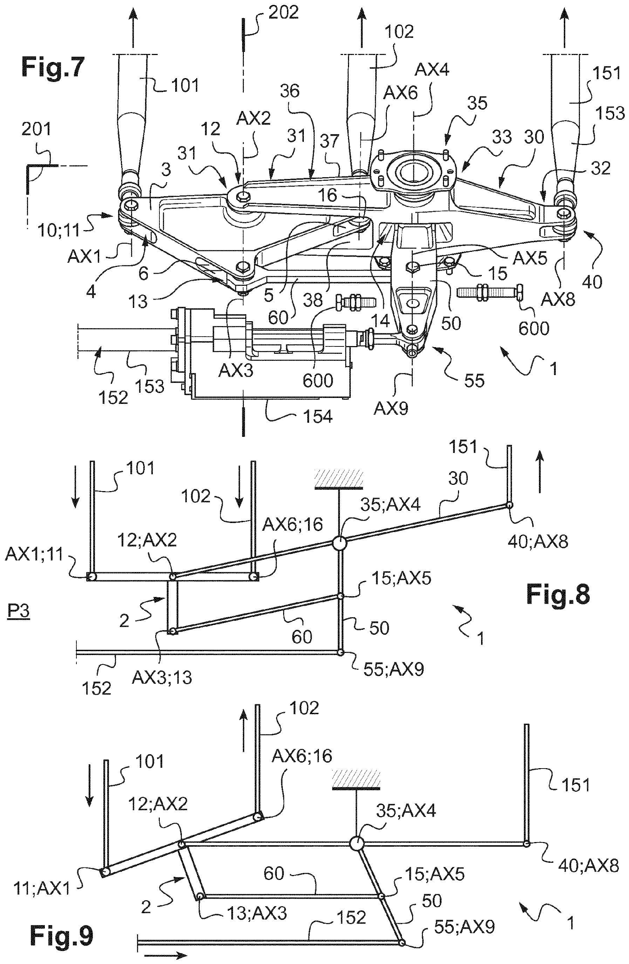

Une telle deuxième liaison mécanique peut comprendre au moins une bielle 153 voire au moins un vérin 154 d'un système de pilotage automatique selon l'illustration de la figure 7.

Par ailleurs et en référence à la figure 1, le dispositif mécanique comporte une bielle 60 articulée à la troisième articulation 13 du moyen de renvoi 2.

De plus, la bielle 60 est articulée à la pièce mécanique 50 autour d'un cinquième axe de rotation AX5 vertical par une articulation dite « cinquième articulation 15 ». Cette cinquième articulation 15 peut être une articulation à rotule, voire une articulation à roulement à billes ou à rouleaux. Ce cinquième axe de rotation AX5 est par exemple agencé à mi-distance entre le quatrième axe de rotation AX4 et l'axe de rotation d'entrée AX9.

Par ailleurs, l'agencement du moyen de renvoi et la pièce mécanique dans des niches de l'organe mécanique allongé permet d'obtenir une bielle 60 ainsi qu'un moyen de renvoi 2 et une pièce mécanique 50 coplanaires.

En outre, le dispositif mécanique présente une structure déformable en forme de parallélogramme.

En effet et en référence à la figure 5, le deuxième axe de rotation AX2 ainsi que le troisième axe de rotation AX3, le quatrième axe de rotation AX4 et le cinquième axe de rotation AX5 forment chacun un sommet d'un parallélogramme 300 déformable dans chaque plan P3 orthogonal à ces troisième, quatrième, cinquième et sixième axes de rotation.

Dès lors et en référence à la figure 1, cette structure déformable comporte un premier segment de l'organe mécanique allongé 30 s'étirant entre le deuxième axe de rotation AX2 et le quatrième axe de rotation AX4, un deuxième segment de la pièce mécanique 50 s'étirant entre le cinquième axe de rotation AX5 et le quatrième axe de rotation AX4, un troisième segment représenté par la bielle 60 s'étirant entre le cinquième axe de rotation AX5 et le troisième axe de rotation AX3, et un quatrième segment du moyen de renvoi 2 s'étirant entre le deuxième axe de rotation AX2 et le troisième axe de rotation AX3.

Ces premier, deuxième, troisième et quatrième segments ne sont pas nécessairement coplanaires mais forment conjointement une structure en forme de parallélogramme.

La figure 6 illustre le fonctionnement du dispositif mécanique 1.

En référence à la figure 6, lorsque la première liaison mécanique 151 est déplacée d'une distance D1, le parallélogramme formé par le dispositif mécanique se déforme.

Ainsi, l'organe mécanique allongé 30 effectue une rotation autour du quatrième axe de rotation AX4. La bielle 60 effectue une rotation identique autour du cinquième axe de rotation. Dès lors, le moyen de renvoi se déplace sur la distance D1. L'ordre transmis par la première liaison mécanique 151 est alors parfaitement retransmis au premier lien de sortie 101.

Par ailleurs et en référence à la figure 1, le dispositif mécanique peut comporter au moins une butée mécanique 600 pour limiter le déplacement de la pièce mécanique 50.

La figure 1 illustre un premier mode de réalisation.

Outre les caractéristiques générales décrites précédemment, le moyen de renvoi 2 est selon ce premier mode de réalisation muni de trois articulations. Ce moyen de renvoi est alors relié à un unique lien de sortie.

En outre, la pièce mécanique peut comprendre une articulation dite « articulation intermédiaire 56 » apte à être reliée à un sous ensemble de couplage par exemple. Cette articulation intermédiaire 56 définit un axe de rotation intermédiaire AX10 vertical.

La figure 7 illustre un deuxième mode de réalisation.

Selon ce deuxième mode de réalisation, le moyen de renvoi 2 comporte la première articulation 11, la deuxième articulation 12 et la troisième articulation 13 décrites précédemment.

De plus, le moyen de renvoi 2 est muni d'une articulation dite « sixième articulation 16 » qui définit un sixième axe de rotation AX6. Cette sixième articulation est alors reliée au moyen de renvoi 2 et à un deuxième lien de sortie mécanique 102.

Le sixième axe de rotation AX6 est en outre agencé dans le premier plan 201. Par exemple, le deuxième axe de rotation AX2 est disposé entre le premier axe de rotation AX1 et le sixième axe de rotation AX6.

Le moyen de renvoi peut alors avoir une forme en T ou une forme triangulaire. Lorsque le moyen de renvoi a une forme en T, la première articulation ainsi que la deuxième articulation et la sixième articulation sont portées par une branche horizontale du T, la troisième articulation étant portée par une jambe verticale de la forme en T.

Par ailleurs, la quatrième articulation 35 est agencée entre la deuxième articulation 12 et l'articulation de liaison 40 de l'organe mécanique allongé 30. Cette articulation de liaison 40 est alors par exemple agencée à la deuxième extrémité 32 de l'organe mécanique allongé 30.

Les figures 8 et 9 illustrent le fonctionnement de ce deuxième mode de réalisation.

En référence à la figure 8, lorsque la première liaison mécanique 151 est déplacée, l'organe mécanique allongé 30 effectue une rotation autour de son axe de pivotement, à savoir le quatrième axe de rotation AX4.

La deuxième liaison mécanique 152 restant immobile, la pièce mécanique 50 demeure immobile.

Par suite, le moyen de renvoi 2 effectue une translation circulaire. Le premier lien de sortie 101 et le deuxième lien de sortie mécanique sont alors déplacés de la même manière et conjointement.

En référence à la figure 9, lorsque la deuxième liaison mécanique 152 est déplacée, la pièce mécanique 50 effectue une rotation autour de son axe de pivotement, à savoir le quatrième axe de rotation AX4.

L'organe mécanique allongé 30 reste par contre immobile.

Par suite, le moyen de renvoi 2 effectue une rotation par rapport à l'organe mécanique allongé autour du deuxième axe de rotation. Le premier lien de sortie 101 et le deuxième lien de sortie mécanique sont alors conjointement déplacés de manière distincte, éventuellement de manière antagoniste.

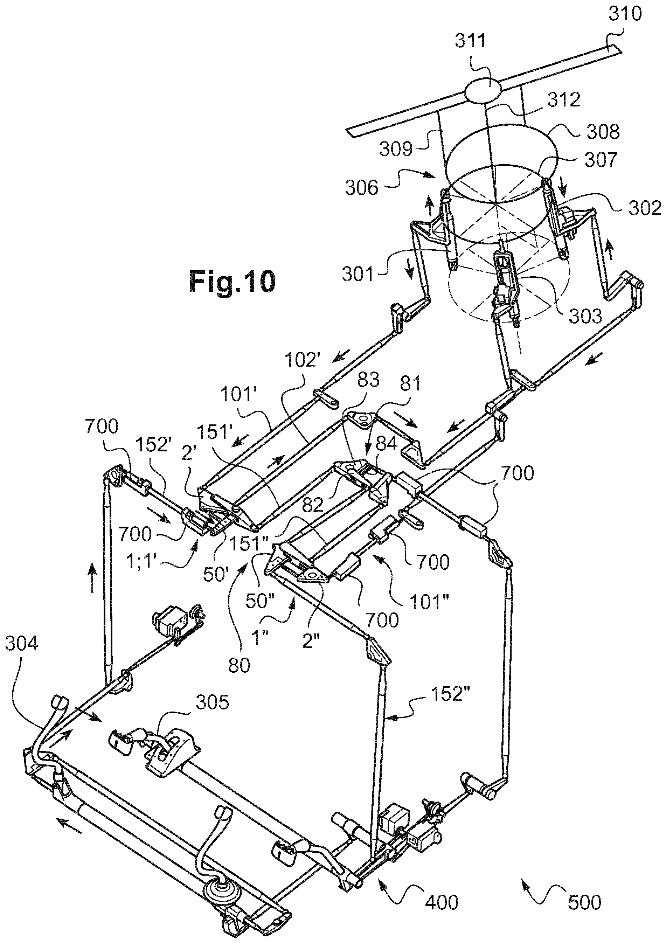

Les figures 10 à 12 illustrent le fonctionnement d'un système mécanique 400 selon l'invention. En particulier, ce système mécanique 400 est une architecture de commande de vol d'un aéronef 500.

Cet aéronef 500 est représenté de manière schématique pour ne pas alourdir inutilement la figure 10.

L'aéronef 500 comprend une voilure tournante munie d'un rotor 313. Le rotor 313 comporte un moyeu 311 portant une pluralité de pales 310. Dès lors, l'aéronef 500 comprend un ensemble 306 de plateaux de commande pour commander le pas cyclique et collectif de ces pales 310.

L'ensemble 306 de plateaux de commande inclut un plateau non tournant 307 coopérant avec un plateau tournant 308 qui est relié à chaque pale 310 par une bielle de pas 309. Un tel ensemble est connu sous l'expression « plateaux cycliques ».

L'aéronef inclut alors un système mécanique 400 pour commander l'ensemble 306 de plateaux de commande.

Le système mécanique comprend un moyen de commande manuel 304 pour commander cycliquement le pas de pales 310 en inclinant l'ensemble 306 de plateaux de commande. De plus, le système mécanique comporte un organe de commande manuel 305 pour commander collectivement le pas de pales 310 en déplaçant en translation l'ensemble 306 de plateaux de commande le long d'un mât rotor 312.

Pour minimiser les efforts à fournir afin de manœuvrer ces commandes manuelles, le moyen de commande manuel 304 et l'organe de commande manuel 305 sont reliés à une pluralité de servocommandes 301, 302, 303. Plus précisément, le moyen de commande manuel 304 et l'organe de commande manuel 305 sont reliés à un distributeur hydraulique de chaque servocommande.

Par exemple, le système mécanique 400 inclut trois servocommandes, à savoir une servocommande longitudinale 303, une servocommande gauche 301 et une servocommande droite 302.

Le système mécanique 400 des figures 10 à 12 comporte un dispositif mécanique 1 selon le deuxième mode de réalisation de la figure 7, dénommé «dispositif mécanique primaire 1'» par commodité.

Dès lors, le premier lien de sortie mécanique 101' du dispositif mécanique primaire 1' relie le moyen de renvoi 2' du dispositif mécanique primaire 1' à la servocommande gauche 301. Le deuxième lien de sortie mécanique 102' du dispositif mécanique primaire 1' relie le moyen de renvoi 2' du dispositif mécanique primaire 1' à la servocommande droite 302.

En outre, la deuxième liaison mécanique 152' du dispositif mécanique primaire 1' relie le moyen de commande manuel 304 à la pièce mécanique 50' du dispositif mécanique. Plus précisément, un déplacement latéral du moyen de commande manuel 304 met en mouvement la deuxième liaison mécanique 152' du dispositif mécanique primaire 1'.

Enfin, la première liaison mécanique 151' du dispositif mécanique primaire 1' relie le dispositif mécanique primaire 1' à un sous ensemble de couplage 80.

Ce sous ensemble de couplage 80 comporte un dispositif mécanique 1 selon le premier mode de réalisation de la figure 1, dénommé « dispositif mécanique secondaire 1" » par commodité.

Dès lors, le premier lien de sortie mécanique 101" du dispositif mécanique secondaire 1" relie le moyen de renvoi 2" du dispositif mécanique secondaire 1" à la servocommande longitudinale 303.

En outre, la première liaison mécanique 151" du dispositif mécanique secondaire 1" relie le dispositif mécanique secondaire 1" à l'organe de commande manuel 305.

La deuxième liaison mécanique 152" du dispositif mécanique secondaire 1" relie le moyen de commande manuel 304 à la pièce mécanique 50" du dispositif mécanique secondaire 1". Plus précisément, un déplacement longitudinal du moyen de commande manuel 304 met en mouvement la deuxième liaison mécanique 152" du dispositif mécanique secondaire 1".

Enfin, le dispositif mécanique secondaire comporte une articulation intermédiaire reliant la pièce mécanique secondaire 50" à une première bielle 82 d'un coupleur 81. Cette première bielle 82 est alors articulée à un renvoi en L 83 du coupleur 81.

Ce renvoi en L 83 est d'une part articulé à la première liaison mécanique 151' du dispositif mécanique primaire 1', et, d'autre part relié à une deuxième bielle 84 du coupleur 81. Cette deuxième bielle 84 est alors articulée à la première bielle 82 autour d'un axe de pivotement immobile de la première bielle 82, de manière à former sensiblement un parallélogramme. De plus, la deuxième bielle 84 est reliée à l'organe de commande manuel 305

Par ailleurs, le système mécanique peut comporter une pluralité de vérins 700.

La figure 10 détaille le fonctionnement du système mécanique 400 suite à un déplacement latéral du moyen de commande manuel 304. Des flèches illustrent le déplacement de certains organes du système.

Par suite, le déplacement latéral du moyen de commande manuel 304 induit un déplacement de la deuxième liaison mécanique 152' du dispositif mécanique primaire 1'.

Dès lors, le moyen de renvoi 2' du dispositif mécanique primaire 1' effectue une rotation. Ce moyen de renvoi 2' tire alors sur un lien de sortie mécanique 101' du dispositif mécanique primaire 1', et pousse l'autre lien de sortie mécanique 102'.

Par conséquent, la servocommande gauche 301 est étendue, alors que la servocommande droite 302 est rétractée. L'ensemble 306 de plateaux de commande est ainsi incliné.

Par contre, le système mécanique ne génère aucun ordre à destination de la servocommande longitudinale.

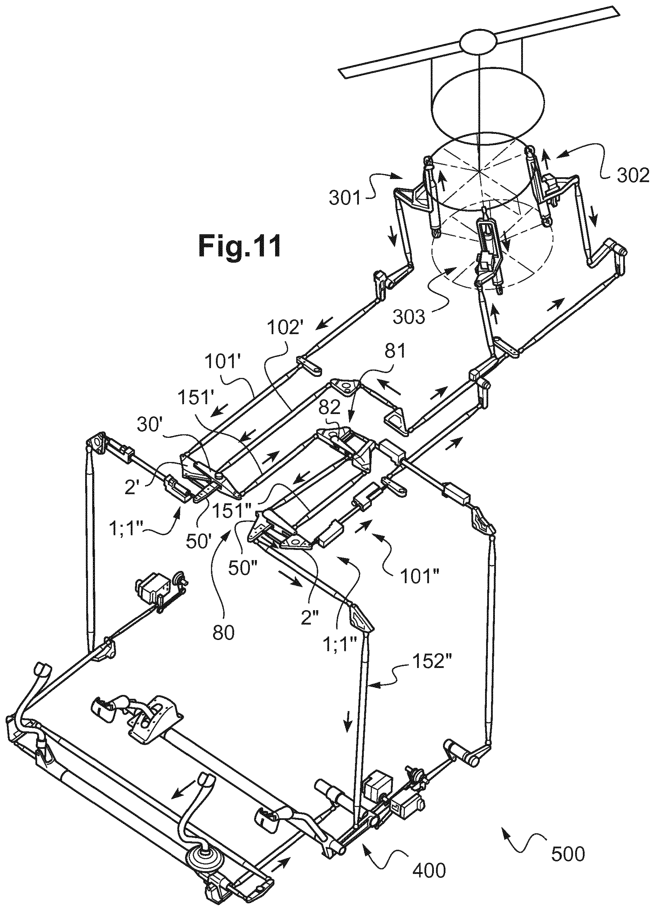

La figure 11 détaille le fonctionnement du système mécanique 400 suite à un déplacement longitudinal du moyen de commande manuel 304. Des flèches illustrent le déplacement de certains organes du système.

Par suite, le déplacement longitudinal du moyen de commande manuel 304 induit un déplacement de la deuxième liaison mécanique 152" du dispositif mécanique secondaire 1".

Dès lors, le moyen de renvoi 2" du dispositif mécanique secondaire 1" effectue une rotation. Ce moyen de renvoi 2" déplace alors le premier lien de sortie mécanique 101" du dispositif mécanique secondaire 1". Par conséquent, la servocommande longitudinale 303 est selon la figure 11 rétractée.

De plus, la pièce mécanique 50" du dispositif mécanique secondaire 1" effectue une rotation induisant le pivotement de la première bielle 82 du coupleur 81 selon l'invention.

Ce coupleur 81 déplace alors la première liaison mécanique 151' du dispositif mécanique primaire 1'.

L'organe mécanique 30' du dispositif mécanique primaire 1' effectue une rotation, et déplace de fait selon une translation circulaire le moyen de renvoi 2' du dispositif mécanique primaire 1'.

Dès lors, la servocommande gauche et la servocommande droite reçoivent un même ordre de commande. Cet ordre de commande est contraire à l'ordre de commande reçu par la servocommande longitudinale. Par suite, si la servocommande longitudinale est rétractée conformément à l'exemple de la figure 11, la servocommande gauche et la servocommande droite sont étendue.

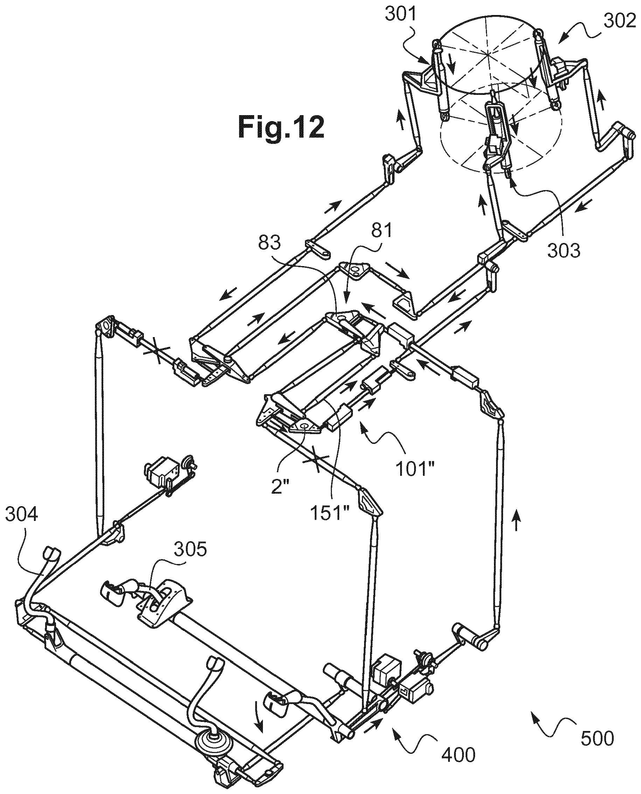

La figure 12 détaille le fonctionnement du système mécanique 400 suite à un déplacement de l'organe de commande manuel 305. Des flèches illustrent le déplacement de certains organes du système.

Par suite, le déplacement de l'organe de commande manuel 305 induit un déplacement de la première liaison mécanique 151" du dispositif mécanique secondaire 1".

Dès lors, le moyen de renvoi 2" du dispositif mécanique secondaire 1" effectue une rotation. Ce moyen de renvoi 2" déplace alors le lien de sortie mécanique 101" du dispositif mécanique secondaire 1". Par conséquent, la servocommande longitudinale 303 est selon la figure 11 rétractée.

De plus, le renvoi en L 83 du coupleur 81 pivote.

Ce coupleur 81 déplace alors la première liaison mécanique 151' du dispositif mécanique primaire 1'.

L'organe mécanique 30' du dispositif mécanique primaire 1' effectue une rotation, et déplace de fait le moyen de renvoi 2' du dispositif mécanique primaire 1'.

Dès lors, la servocommande gauche et la servocommande droite reçoivent un même ordre de commande, cet ordre de commande étant identique à l'ordre de commande reçu par la servocommande longitudinale. Par suite, si la servocommande longitudinale est rétractée conformément à l'exemple de la figure 12, la servocommande gauche et la servocommande droite sont rétractées de la même manière.

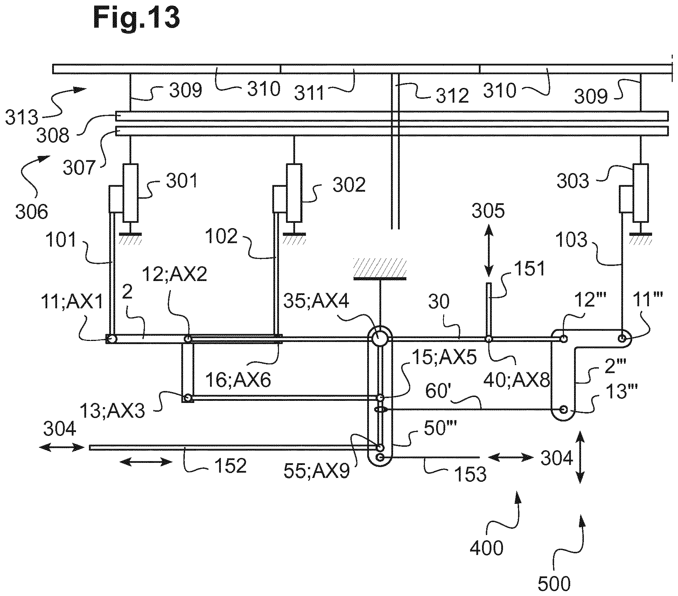

La figure 13 présente une vue d'un dispositif mécanique selon un troisième mode de réalisation de l'invention agencé dans un système mécanique.

Ce troisième mode de réalisation comporte les organes du deuxième mode de réalisation présenté sur la figure 8.

Ainsi, le dispositif mécanique comporte un organe mécanique allongé 30 articulé à pivot 35, à une première liaison mécanique 151 et à un premier moyen de renvoi 2.

Ce premier moyen de renvoi est articulé à un premier lien de sortie 101 éventuellement relié à une servocommande gauche 301, et à un deuxième lien de sortie éventuellement relié à une servocommande droite 302.

Une première bielle 60 est en outre articulée à une première pièce mécanique 50, cette première pièce mécanique étant de plus articulée à une deuxième liaison mécanique et audit pivot 35.

En outre, le dispositif mécanique comporte un deuxième moyen de renvoi 2'" articulé par une articulation 12'" à l'organe mécanique allongé 30 autour d'un axe de rotation vertical. De plus, ce deuxième moyen de renvoi est articulé par une articulation 1'' autour d'un axe de rotation vertical à un troisième lien de sortie mécanique 103. Ce troisième lien de sortie mécanique 103 est éventuellement relié à au moins une servocommande longitudinale 303.

Dès lors, une deuxième bielle 60' est en outre articulée à une deuxième pièce mécanique 50''', cette deuxième pièce mécanique étant de plus articulée à une troisième liaison mécanique et audit pivot 35.

Un segment de l'organe mécanique 30, un segment du deuxième moyen de renvoi 2", la deuxième bielle 60' et un segment de la deuxième pièce mécanique 50"' forment conjointement une structure en forme de parallélogramme.

Par suite, la première liaison mécanique 151 peut être contrôlée par un organe de commande manuel 305. Un déplacement de l'organe de commande manuel 305 génère alors un ordre de commande collectif transmis mécaniquement aux trois servocommandes 301, 302, 303.

La deuxième liaison mécanique 152 peut être mise en mouvement suite à un déplacement latéral d'un moyen de commande manuel 304. Un tel déplacement latéral du moyen de commande manuel 304 génère alors un ordre de commande cyclique transmis mécaniquement à la première servocommande 301 et à la deuxième servocommande 302.

La troisième liaison mécanique 153 peut être mise en mouvement suite à un déplacement longitudinal d'un moyen de commande manuel 304. Un tel déplacement longitudinal du moyen de commande manuel 304 génère alors un ordre de commande cyclique transmis mécaniquement à la troisième servocommande 303.

## Revendications

1. Système mécanique comportant
un combinateur (1), le combinateur comportant :
- un moyen de renvoi (2) muni d'une première articulation (11) ainsi que d'une deuxième articulation (12) et d'une troisième articulation (13), la première articulation (11) définissant un premier axe de rotation (AX1) vertical et étant articulée à un premier lien de sortie mécanique (101), la deuxième articulation (12) définissant un deuxième axe de rotation (AX2) vertical, la troisième articulation (13) définissant un troisième axe de rotation (AX3) vertical, le premier axe de rotation (AX1) vertical ainsi que le deuxième axe de rotation (AX2) vertical étant alignés dans un premier plan (201), le deuxième axe de rotation (AX2) et le troisième axe de rotation (AX3) étant alignés dans un deuxième plan (202),
- un organe mécanique allongé (30) s'étendant d'une première extrémité (31) articulée au moyen de renvoi (2) par la deuxième articulation (12) vers une deuxième extrémité (32), ledit organe mécanique allongé (30) comprenant une quatrième articulation (35) définissant un quatrième axe de rotation (AX4) vertical immobile, la quatrième articulation étant apte à être reliée à un support (93) immobile, ledit organe mécanique allongé (30) étant uniquement mobile en rotation autour dudit quatrième axe de rotation (AX4), ledit organe mécanique allongé (30) comprenant une articulation de liaison (40) qui est articulée à une première liaison mécanique (151) et qui définit un axe de rotation de liaison (AX8) vertical, ladite première liaison mécanique (151) étant reliée à un organe de commande manuel (305) dudit système (400)
- une pièce mécanique (50) uniquement mobile en rotation autour dudit quatrième axe de rotation (AX4) par le biais d'une articulation de pivotement (14), ladite pièce mécanique (50) ayant une articulation d'entrée (55) qui est articulée à une deuxième liaison mécanique (152) et qui définit un axe de rotation d'entrée (AX9) vertical, ladite deuxième liaison mécanique (152) étant reliée à un moyen de commande (304) manuel dudit système (400)
- une bielle (60) articulée d'une part à la troisième articulation (13) du moyen de renvoi (2) et d'autre part à la pièce mécanique (50) autour d'un cinquième axe de rotation (AX5) vertical par une cinquième articulation (15), le deuxième axe de rotation (AX2) ainsi que le troisième axe de rotation (AX3) et le quatrième axe de rotation (AX4) et le cinquième axe de rotation (AX5) formant chacun et en permanence un sommet d'un parallélogramme (300) déformable dans chaque plan (P3) orthogonal à ces deuxième, troisième, quatrième, et cinquième axes de rotation.

2. Système mécanique selon la revendication 1,
**caractérisé en ce qu'**au moins une desdites première articulation (11), troisième articulation (13), cinquième articulation (15), articulation de liaison (40) et articulation d'entrée (55) comporte une rotule (70) munie d'une tige (71) s'étendant respectivement selon le premier axe de rotation (AX1), le troisième axe de rotation (AX3), le cinquième axe de rotation (AX5), l'axe de rotation de liaison (AX8) et l'axe de rotation d'entrée (AX9).

3. Système mécanique selon l'une quelconque des revendications 1 à 2,
**caractérisé en ce que** ladite quatrième articulation (35) comporte une tige de pivotement (90) s'étendant verticalement selon le quatrième axe de rotation (AX4), ladite quatrième articulation (35) comportant un moyen de roulement (39) agencé autour de ladite tige de pivotement (90) et solidaire de l'organe mécanique allongé (30), ladite articulation de pivotement (14) comportant ladite tige de pivotement et (90) un système de roulement (39') agencé autour de ladite tige de pivotement (90) et solidaire de ladite pièce mécanique (50).

4. Système mécanique selon l'une quelconque des revendications 1 à 2,
**caractérisé en ce que** ledit organe mécanique allongé (30) comporte une chape (36) en forme de C munie de deux joues (37, 38) en vis-à-vis, la deuxième articulation (12) s'étendant verticalement d'une joue (37) à l'autre joue (38), le moyen de renvoi (2) s'étendant partiellement entre lesdites deux joues (37, 38).

5. Système mécanique selon l'une quelconque des revendications 1 à 3,
**caractérisé en ce que** ladite quatrième articulation (35) comporte un moyen de fixation (91) apte à fixer cette quatrième articulation (35) audit support (93).

6. Système mécanique selon l'une quelconque des revendications 1 à 5,
**caractérisé en ce que** ledit organe mécanique allongé (30) et ladite pièce mécanique (50) comportent uniquement un degré de liberté en rotation autour du quatrième axe de rotation (AX4).

7. Système mécanique selon l'une quelconque des revendications 1 à 6,
**caractérisé en ce que** ledit moyen de renvoi (2) comporte uniquement un degré de liberté en rotation autour du deuxième axe de rotation (AX2) par rapport à l'organe mécanique allongé (30).

8. Système mécanique selon l'une quelconque des revendications 1 à 7,
**caractérisé en ce que** ladite articulation de liaison (40) est agencée à la deuxième extrémité (32) dudit organe mécanique allongé (30).

9. Système mécanique selon l'une quelconque des revendications 1 à 8,
**caractérisé en ce que** ladite pièce mécanique (50) comporte une articulation intermédiaire (56) apte à être reliée à un sous ensemble de couplage, ladite articulation intermédiaire (56) définissant un axe de rotation intermédiaire (AX10) vertical.

10. Système mécanique selon l'une quelconque des revendications 1 à 9,
**caractérisé en ce que** ledit moyen de renvoi (2) comporte une sixième articulation (16) définissant un sixième axe de rotation (AX6) vertical, ladite sixième articulation (16) étant apte à être liée à un deuxième lien de sortie mécanique (102), ledit sixième axe de rotation (AX6) vertical étant agencé dans ledit premier plan (201), ledit deuxième axe de rotation (AX2) étant disposé entre le premier axe de rotation (AX1) et le sixième axe de rotation (AX6).

11. Système mécanique selon l'une quelconque des revendications 1 à 10,
**caractérisé en ce que** ledit cinquième axe de rotation (AX5) est agencé à mi-distance entre le quatrième axe de rotation (AX4) et l'axe de rotation d'entrée (AX9).

12. Système mécanique selon l'une quelconque des revendications 1 à 11,
**caractérisé en ce que** ladite bielle (60) ainsi que ledit moyen de renvoi (2) et ladite pièce mécanique (50) sont coplanaires.

13. Système mécanique selon l'une quelconque des revendications 1 à 12,
**caractérisé en ce que** ledit deuxième plan (202) est orthogonal au premier plan (201)

14. Système mécanique selon l'une quelconque des revendications 1 à 13,
**caractérisé en ce que** le premier lien de sortie mécanique (101) comporte une première servocommande (301) reliée à un ensemble (306) de plateaux de commande, cet ensemble (306) de plateaux de commande étant apte à être relié à des pales (310) d'un rotor (313).

15. Système mécanique selon la revendication 14,
**caractérisé en ce que** ledit moyen de renvoi comporte une sixième articulation (16) reliée à un deuxième lien de sortie mécanique (102), ledit deuxième lien de sortie mécanique (102) comportant une deuxième servocommande (302) reliée audit ensemble (306) de plateaux de commande.

16. Système mécanique selon la revendication 15,
**caractérisé en ce que** ladite première liaison mécanique (151) est reliée à un sous ensemble de couplage (80), ledit sous ensemble de couplage (80) étant relié à une troisième servocommande (303) qui est reliée audit ensemble (306) de plateaux de commande, ledit sous ensemble de couplage (80) étant relié
- audit organe de commande manuel (304) pour transmettre un premier ordre à la troisième servocommande (303) et pour pivoter l'organe mécanique allongé (30) autour du quatrième axe de rotation (AX4) afin de déplacer le moyen de renvoi (2) pour transmettre un même deuxième ordre à la première servocommande (301) et à la deuxième servocommande (302), le deuxième ordre étant différent du premier ordre et
- audit moyen de commande manuel (305) pour transmettre un troisième ordre à la troisième servocommande (303) et pour pivoter l'organe mécanique allongé (30) autour du quatrième axe de rotation (AX4) afin de déplacer le moyen de renvoi (2) pour transmettre un quatrième ordre identique à la première servocommande (301) et à la deuxième servocommande (302), le troisième ordre étant identique au quatrième ordre.

17. Aéronef (500),
**caractérisé en ce que** cet aéronef (500) est muni d'un Système mécanique selon l'une quelconque des revendications 1 à 16.

## Patentansprüche

1. Mechanisches System mit einem Kombinator (1), wobei der Kombinator umfasst:
- ein Umlenkmittel (2), das mit einem ersten Gelenk (11) sowie mit einem zweiten Gelenk (12) und einem dritten Gelenk (13) versehen ist, wobei das erste Gelenk (11) eine erste vertikale Drehachse (AX1) definiert und mit einem ersten mechanischen Ausgangsglied (101) gelenkig verbunden ist, das zweite Gelenk (12) eine zweite vertikale Drehachse (AX2) definiert, und das dritte Gelenk (13) eine dritte vertikale Drehachse (AX3) definiert, wobei die erste vertikale Drehachse (AX1) und die zweite vertikale Drehachse (AX2) in einer ersten Ebene (201) ausgerichtet sind, und die zweite Drehachse (AX2) und die dritte Drehachse (AX3) in einer zweiten Ebene (202) ausgerichtet sind,
- ein langgestrecktes mechanisches Element (30), das sich von einem ersten Ende (31), das durch das zweite Gelenk (12) an dem Umlenkmittel (2) angelenkt ist, zu einem zweiten Ende (32) erstreckt, wobei das langgestreckte mechanische Element (30) ein viertes Gelenk (35) aufweist, das eine unbewegliche vertikale vierte Drehachse (AX4) definiert, wobei das vierte Gelenk mit einem unbeweglichen Träger (93) verbindbar ist, das langgestreckte mechanische Element (30) nur um die vierte Drehachse (AX4) drehbar ist, wobei das langgestreckte mechanische Element (30) ein Verbindungsgelenk (40) aufweist, das an einem ersten mechanischen Verbindungsglied (151) angelenkt ist und das eine vertikale Verbindungsdrehachse (AX8) definiert, wobei das erste mechanische Verbindungsglied (151) mit einem manuellen Steuerelement (305) des Systems (400) verbunden ist,
- ein mechanisches Teil (50), das nur um die vierte Drehachse (AX4) mittels eines Schwenkgelenks (14) drehbar ist, wobei das mechanische Teil (50) ein Eingangsgelenk (55) aufweist, das an ein zweites mechanisches Verbindungsglied (152) angelenkt ist und das eine vertikale Eingangsdrehachse (AX9) definiert, wobei das zweite mechanische Verbindungsglied (152) mit einem manuellen Steuermittel (304) des Systems (400) verbunden ist,
- eine Pleuelstange (60), die einerseits am dritten Gelenk (13) des Umlenkmittels (2) und andererseits am mechanischen Teil (50) um eine fünfte vertikale Drehachse (AX5) durch ein fünftes Gelenk (15) angelenkt ist, wobei die zweite Drehachse (AX2) sowie die dritte Drehachse (AX3) und die vierte Drehachse (AX4) und die fünfte Drehachse (AX5) jeweils dauerhaft einen Scheitelpunkt eines Parallelogramms (300) bilden, das in jeder zu dieser zweiten, dritten, vierten und fünften Drehachse orthogonalen Ebene (P3) verformbar ist.

2. Mechanisches System nach Anspruch 1,
**dadurch gekennzeichnet, dass** unter dem ersten Gelenk (11), dem dritten Gelenk (13), dem fünften Gelenk (15), dem Verbindungsgelenk (40) und dem Eingangsgelenk (55) mindestens eines ein Kugelgelenk (70) umfasst, das mit einer Stange (71) versehen ist, die sich jeweils entlang der ersten Drehachse (AX1), der dritten Drehachse (AX3), der fünften Drehachse (AX5), der Verbindungsdrehachse (AX8) bzw. der Eingangsdrehachse (AX9) erstreckt.

3. Mechanisches System nach einem der Ansprüche 1 bis 2,
**dadurch gekennzeichnet, dass** das vierte Gelenk (35) eine Schwenkstange (90) umfasst, die sich vertikal entlang der vierten Drehachse (AX4) erstreckt, wobei das vierte Gelenk (35) ein Lagermittel (39) umfasst, das um die Schwenkstange (90) herum angeordnet und einstückig mit dem langgestreckten mechanischen Element (30) ausgebildet ist, wobei das Schwenkgelenk (14) die Schwenkstange (90) und ein Lagersystem (39') umfasst, das um die Schwenkstange (90) herum angeordnet und fest mit dem mechanischen Teil (50) verbunden ist.

4. Mechanisches System nach einem der Ansprüche 1 bis 2,
**dadurch gekennzeichnet, dass** das langgestreckte mechanische Element (30) einen C-förmigen Gabelkopf (36) mit zwei gegenüberliegenden Wangen (37, 38) umfasst, wobei sich das zweite Gelenk (12) vertikal von einer Wange (37) zur anderen Wange (38) erstreckt und das Umlenkmittel (2) sich teilweise zwischen den beiden Wangen (37, 38) erstreckt.

5. Mechanisches System nach einem der Ansprüche 1 bis 3,
**dadurch gekennzeichnet, dass** das vierte Gelenk (35) ein Befestigungsmittel (91) umfasst, das geeignet ist, dieses vierte Gelenk (35) an dem Träger (93) zu befestigen.

6. Mechanisches System nach einem der Ansprüche 1 bis 5,
**dadurch gekennzeichnet, dass** das langgestreckte mechanische Element (30) und das mechanische Teil (50) nur einen Freiheitsgrad der Drehung um die vierte Drehachse (AX4) haben.

7. Mechanisches System nach einem der Ansprüche 1 bis 6,
**dadurch gekennzeichnet, dass** das Umlenkmittel (2) in Bezug auf das langgestreckte mechanische Element (30) nur einen Freiheitsgrad der Drehung um die zweite Drehachse (AX2) aufweist.

8. Mechanisches System nach einem der Ansprüche 1 bis 7,
**dadurch gekennzeichnet, dass** das Verbindungsgelenk (40) am zweiten Ende (32) des langgestreckten mechanischen Elements (30) angeordnet ist.

9. Mechanisches System nach einem der Ansprüche 1 bis 8,
**dadurch gekennzeichnet, dass** das mechanische Teil (50) ein Zwischengelenk (56) umfasst, das geeignet ist, mit einer Kopplungsunterbaugruppe verbunden zu werden, wobei das Zwischengelenk (56) eine vertikale Zwischendrehachse (AX10) definiert.

10. Mechanisches System nach einem der Ansprüche 1 bis 9,
**dadurch gekennzeichnet, dass** das Umlenkmittel (2) ein sechstes Gelenk (16) umfasst, das eine sechste vertikale Drehachse (AX6) definiert, wobei das sechste Gelenk (16) geeignet ist, mit einem zweiten mechanischen Ausgangsglied (102) verbunden zu werden, wobei die sechste vertikale Drehachse (AX6) in der ersten Ebene (201) angeordnet ist, und die zweite Drehachse (AX2) zwischen der ersten Drehachse (AX1) und der sechsten Drehachse (AX6) angeordnet ist.

11. Mechanisches System nach einem der Ansprüche 1 bis 10,
**dadurch gekennzeichnet, dass** die fünfte Drehachse (AX5) auf halbem Weg zwischen der vierten Drehachse (AX4) und der Eingangsdrehachse (AX9) angeordnet ist.

12. Mechanisches System nach einem der Ansprüche 1 bis 11,
**dadurch gekennzeichnet, dass** sowohl die Pleuelstange (60) als auch das Umlenkmittel (2) und das mechanische Teil (50) koplanar sind.

13. Mechanisches System nach einem der Ansprüche 1 bis 12,
**dadurch gekennzeichnet, dass** die zweite Ebene (202) orthogonal zu der ersten Ebene (201) ist.

14. Mechanisches System nach einem der Ansprüche 1 bis 13,
**dadurch gekennzeichnet, dass** das erste mechanische Ausgangsglied (101) eine erste Servosteuerung (301) umfasst, die mit einer Anordnung von Steuerplatten (306) verbunden ist, wobei diese Anordnung von Steuerplatten (306) geeignet ist, um mit Flügeln (310) eines Rotors (313) verbunden zu werden.

15. Mechanisches System nach Anspruch 14,
**dadurch gekennzeichnet, dass** das Umlenkmittel ein sechstes Gelenk (16) umfasst, das mit einem zweiten mechanischen Ausgangsglied (102) verbunden ist, wobei das zweite mechanische Ausgangsglied (102) eine zweite Servosteuerung (302) umfasst, die mit der Anordnung (306) von Steuerplatten verbunden ist.

16. Mechanisches System nach Anspruch 15,
**dadurch gekennzeichnet, dass** die erste mechanische Verbindung (151) mit einer Kopplungsunterbaugruppe (80) verbunden ist, wobei die Kopplungsunterbaugruppe (80) mit einer dritten Servosteuerung (303) verbunden ist, die mit der Anordnung (306) von Steuerplatten verbunden ist, wobei die Kopplungsunterbaugruppe (80) verbunden ist mit dem manuellen Steuerelement (304), um einen ersten Befehl an die dritte Servosteuerung (303) zu übertragen und um das langgestreckte mechanische Element (30) um die vierte Drehachse (AX4) zu schwenken, um das Umlenkmittel (2) zu bewegen, um einen gleichen zweiten Befehl an die erste Servosteuerung (301) und an die zweite Servosteuerung (302) zu übertragen, wobei sich der zweite Befehl von dem ersten Befehl unterscheidet, und mit dem manuellen Steuermittel (305) um einen dritten Befehl an die dritte Servosteuerung (303) zu übertragen und um das langgestreckte mechanische Element (30) um die vierte Drehachse (AX4) zu schwenken, um das Umlenkmittel (2) zum Übertragen eines identischen vierten Befehls an die erste Servosteuerung (301) und die zweite Servosteuerung (302) zu bewegen, wobei der dritte Befehl mit dem vierten Befehl identisch ist.

17. Luftfahrzeug (500),
**dadurch gekennzeichnet, dass** das Luftfahrzeug (500) mit einem mechanischen System nach einem der Ansprüche 1 bis 16 versehen ist.

## Claims

1. Mechanical system comprising a mixing unit (1), the mixing unit comprising:
- a return means (2) provided with a first hinge (11) as well as a second hinge (12) and a third hinge (13), the first hinge (11) defining a first vertical axis of rotation (AX1) and being hinged to a first mechanical output link (101), the second hinge (12) defining a second vertical axis of rotation (AX2), the third hinge (13) defining a third vertical axis of rotation (AX3), the first vertical axis of rotation (AX1) as well as the second vertical axis of rotation (AX2) being aligned in a first plane (201), the second axis of rotation (AX2) and the third axis of rotation (AX3) being aligned in a second plane (202);
- an elongate mechanical member (30) extending from a first end (31), which is hinged to the return means (2) by the second hinge (12), to a second end (32), said elongate mechanical member (30) including a fourth hinge (35) that defines a fixed fourth vertical axis of rotation (AX4), the fourth hinge being suitable for being connected to a fixed support (93), said elongate mechanical member (30) being only movable in rotation about said fourth axis of rotation (AX4), said elongate mechanical member (30) including a link hinge (40) which is hinged to a first mechanical link (151) and which defines a vertical link axis of rotation (AX8), said first mechanical link (151) being connected to a manual control member (305) of said system (400);
- a mechanical part (50) only movable in rotation about said fourth axis of rotation (AX4) by means of a pivot hinge (14), said mechanical part (50) having an input hinge (55) which is hinged to a second mechanical link (152) and which defines a vertical input axis of rotation (AX9), said second mechanical link (152) being connected to a manual control means (304) of said system (400);
- a connecting rod (60) hinged at one end to the third hinge (13) of the return means (2) and at the other end to the mechanical part (50) about a fifth vertical axis of rotation (AX5) by a fifth hinge (15), the second axis of rotation (AX2) as well as the third axis of rotation (AX3), the fourth axis of rotation (AX4) and the fifth axis of rotation (AX5) each and permanently forming a vertex of a deformable parallelogram (300) in each plane (P3) that is orthogonal to these second, third, fourth, and fifth axes of rotation.

2. Mechanical system according to claim 1, **characterised in that** at least one of said first hinge (11), third hinge (13), fifth hinge (15), link hinge (40) and input hinge (55) comprises a swivel joint (70) provided with a pin (71) that extends along the first axis of rotation (AX1), the third axis of rotation (AX3), the fifth axis of rotation (AX5), the link axis of rotation (AX8) and the input axis of rotation (AX9), respectively.

3. Mechanical system according to either claim 1 or claim 2, **characterised in that** said fourth hinge (35) comprises a pivot pin (90) that extends vertically along the fourth axis of rotation (AX4), said fourth hinge (35) comprising a bearing means (39) that is arranged around said pivot pin (90) and is rigidly connected to the elongate mechanical member (30), said pivot hinge (14) comprising said pivot pin (90) and a bearing system (39') that is arranged around said pivot pin (90) and is rigidly connected to said mechanical part (50).

4. Mechanical system according to either claim 1 or claim 2, **characterised in that** said elongate mechanical member (30) comprises a C-shaped clevis (36) provided with two facing flanges (37, 38), the second hinge (12) extending vertically from one flange (37) to the other flange (38), the return means (2) extending in part between said two flanges (37, 38).

5. Mechanical system according to any of claims 1 to 3, **characterised in that** said fourth hinge (35) comprises an attachment means (91) suitable for securing this fourth hinge (35) to said support (93).

6. Mechanical system according to any of claims 1 to 5, **characterised in that** said elongate mechanical member (30) and said mechanical part (50) only have one degree of freedom in rotation about the fourth axis of rotation (AX4).

7. Mechanical system according to any of claims 1 to 6, **characterised in that** said return means (2) only has one degree of freedom in rotation about the second axis of rotation (AX2) with respect to the elongate mechanical member (30).

8. Mechanical system according to any of claims 1 to 7, **characterised in that** said link hinge (40) is arranged at the second end (32) of said elongate mechanical member (30).

9. Mechanical system according to any of claims 1 to 8, **characterised in that** said mechanical part (50) comprises an intermediate hinge (56) suitable for being connected to a coupling sub-assembly, said intermediate hinge (56) defining a vertical intermediate axis of rotation (AX10).

10. Mechanical system according to any of claims 1 to 9, **characterised in that** said return means (2) comprises a sixth hinge (16) that defines a sixth vertical axis of rotation (AX6), said sixth hinge (16) being suitable for being linked to a second mechanical output link (102), said sixth vertical axis of rotation (AX6) being arranged in said first plane (201), said second axis of rotation (AX2) being arranged between the first axis of rotation (AX1) and the sixth axis of rotation (AX6).

11. Mechanical system according to any of claims 1 to 10, **characterised in that** said fifth axis of rotation (AX5) is arranged halfway between the fourth axis of rotation (AX4) and the input axis of rotation (AX9).

12. Mechanical system according to any of claims 1 to 11, **characterised in that** said connecting rod (60) as well as said return means (2) and said mechanical part (50) are coplanar.

13. Mechanical system according to any of claims 1 to 12, **characterised in that** said second plane (202) is orthogonal to the first plane (201).

14. Mechanical system according to any of claims 1 to 13, **characterised in that** the first mechanical output link (101) comprises a first actuator (301) connected to a set (306) of control plates, it being possible for this set (306) of control plates to be connected to blades (310) of a rotor (313).

15. Mechanical system according to claim 14, **characterised in that** said return means comprises a sixth hinge (16) connected to a second mechanical output link (102), said second mechanical output link (102) comprising a second actuator (302) connected to said set (306) of control plates.

16. Mechanical system according to claim 15, **characterised in that** said first mechanical link (151) is connected to a coupling sub-assembly (80), said coupling sub-assembly (80) being connected to a third actuator (303) which is connected to said set (306) of control plates, said coupling sub-assembly (80) being connected
- to said manual control member (304) in order to transmit a first command to the third actuator (303) and in order to pivot the elongate mechanical member (30) about the fourth axis of rotation (AX4) so as to move the return means (2) in order to transmit the same second command to the first actuator (301) and to the second actuator (302), the second command being different from the first command, and
- to said manual control means (305) in order to transmit a third command to the third actuator (303) and in order to pivot the elongate mechanical member (30) about the fourth axis of rotation (AX4) so as to move the return means (2) in order to transmit an identical fourth command to the first actuator (301) and to the second actuator (302), the third command being identical to the fourth command.

17. Aircraft (500), **characterised in that** this aircraft (500) is provided with a mechanical system according to any of claims 1 to 16.
